# EUROPEAN PATENT SPECIFICATION

(11) **EP 1 377 357 B1**
(45) Date of publication and mention of the grant of the patent: **08.12.2010**
(21) Application number: 02761900.6
(22) Date of filing: 28.03.2002
(51) Int. Cl.: B01D 39/20, B01D 39/10

(54) **A FILTRATION APPARATUS**
FILTERVORRICHTUNG
DISPOSITIF DE FILTRATION

(30) Priority: 11.04.2001 EP 01201328; 26.11.2001 EP 01204577
(43) Date of publication of application: 07.01.2004
(73) Proprietor: N.V. BEKAERT S.A., 8550 Zwevegem (BE)
(72) Inventor: VANHOUTTE, Guy, B-8500 KORTRIJK (BE)
(86) International application number: PCT/EP2002/003712
(87) International publication number: WO 2002/083267

(56) References cited:
- US-A- 3 437 457
- US-A- 4 443 421
- US-A- 5 679 441

## Description

### Field of the invention.

The invention relates to a filtration apparatus comprising at least one filter element comprising a non-woven metal fiber fleece as filter medium.

US-A-4 443 421 exemplifies such an apparatus

### Background of the invention.

A filtration drum known in the art comprises a drum body and a filter medium such as a polymer or steel wire mesh mounted around the drum body.

In this type of filtration apparatus the liquid to be filtered passes through the filter medium due to a difference between the liquid level inside and outside the filtration drum. The filtration drum is rotated and solid particles are retained by the filter medium.

A drawback of this type of filtration drum is the limited filter fineness of the polymer or steel wire mesh as filter medium.

Moreover, by increasing the filter fineness of the filter medium, its mechanical stability is decreased. When the filter medium has an acceptable filter fineness, the mechanical stability of the filter medium will be insufficient.

Another drawback of steel wire or polymer meshes as filter medium is their low filtration flux due to the very low open area of the mesh.

### Summary of the invention.

It is an object of the present invention to provide a filtration apparatus that avoids the drawbacks of the prior art.

It is another object of the invention to provide a filtration apparatus which is characterised by a high rigidity and at the same time by a high filter fineness.

It is a further object to provide a filtration apparatus that has a high filtration flux.

It is still a further object to provide a filtration apparatus having a filter medium that can easily and efficiently be cleaned.

According to a first aspect of the present invention a filtration apparatus is provided. The filtration apparatus comprises at least one tubular filter element. This tubular filter element comprises a filter medium comprising a non-woven metal fiber fleece and a reinforcing layer. The non-woven metal fiber fleece is sintered to the reinforcing layer.

In one embodiment the non-woven metal fiber fleece is located at the flow-in side of the filter medium and the reinforcing layer is located at the flow-out side of the filter medium.

In another embodiment the non-woven metal fiber fleece is located at the flow-out side of the filter medium and the reinforcing layer is located at the flow-in side of the filter medium.

A third embodiment comprises a layered structure comprising a non-woven metal fiber fleece at both sides of a reinforcing layer.

The non-woven metal fiber fleece comprises preferably metal fibers having an equivalent diameter ranging between 0.5 µm and 100 µm. More preferably, the equivalent fiber diameter is between 0.5 µm and 50 µm, e.g. between 1 µm and 25 µm, such as 2 µm, 4 µm, 8 µm or 12 µm. With equivalent diameter is meant the diameter of an imaginary circle having the same surface of the surface of a radial or cross section of a metal fiber.

The metal fibers may comprise metal fibers of all lengths. They may comprise long metal fibers, short metal fibers or mixtures thereof. For the purpose of this invention short metal fibers are defined as metal fibers characterized by a length to diameter ratio ranging between 10 and 100.

Long metal fibers are fibers having a length ranging from millimeters to centimeters.

Any type of metal or metal alloy may be used to provide the metal fibers of the metal fiber fleece. Preferably, steel fibers such as stainless steel fibers are used. Preferred stainless steel alloys are AISI 300 or AISI 400-serie alloys, such as AISI 316L or AISI 347, or alloys comprising Fe, Al and Cr, stainless steel comprising chromium, aluminium and/or nickel and 0.05 to 0.3 % by weight of yttrium, cerium, lanthanum, hafnium or titanium are used, known as Fecralloy^{®}.

The metal fibers may be obtained by any technique known in the art, they may for example be obtained by bundle drawing or by shaving techniques.

The metal fiber fleece may comprise only one layer of metal fibers, or may comprise a stack of different metal fiber fleeces, each metal fiber fleece comprising fibers with a specific equivalent diameter, fiber density and weight of the layer. The weight of a layer is expressed in g/m² and will hereafter be referred to as "specific layerweight".

A preferred filter medium comprises a non-woven metal fiber fleece comprising long metal fibers as first layer and a second layer comprising short metal fibers. The "short" metal fibers can be deposited on the metal fiber fleece comprising long metal fibers in any way known in the art. A set of short metal fibers can for example be poured on a non-woven metal fiber fleece comprising long metal fibers. In a subsequent step, the short metal fibers can be sintered to the non-woven metal fiber fleece comprising long metal fibers.

As mentioned above, the non-woven metal fiber fleece is at one surface supported and reinforced by the reinforcing layer. In some applications, it can be preferred that the non-woven metal fiber fleece is reinforced also at its other surface. The non-woven metal fiber fleece can for example be supported by a mesh at the surface that is not reinforced by the reinforcing layer. In a preferred embodiment the mesh is sintered to the non-woven metal fiber fleece.

Preferably, the reinforcing layer comprises a metal sheet provided with open areas, such as holes or apertures.

A metal sheet provided with open areas, will hereafter be referred to as "perforated metal sheet".

For the purpose of this invention "perforated" has to be understood in a non-restrictive way. The open areas in the perforated metal sheet may be provided by perforation, but also by e.g. laser cutting, drilling, die cutting, punching or any other known technique to provide open area to a metal sheet.

An "open area" of the perforated metal sheet is to be understood as a zone of the metal sheet where the metal has been removed or an aperture or perforation has been provided. The remaining area of the perforated metal sheet, where the metal has not been removed, is hereafter referred to as "metal area".

It is preferred that the total open area of said metal sheet comprises 50% or more of the total surface of the metal fiber sheet. More preferably, the total open area is more than 70%, most preferably more than 80% or even more than 85%.

With "total open area" of the metal sheet is meant the sum of the surfaces of all open areas present at the surface of the metal sheet, and which are, according to the present invention covered by the metal fiber fleece.

The thickness of the reinforcing layer is preferably between 0.2 mm and 3 mm, for example between 0.5 and 2 mm.

The metal fiber fleece and the reinforcing layer are sintered to each other in such a way that the metal fiber fleece covers all open areas of the reinforcing layer completely.

The metal fiber fleece is for example sintered to the metal area of a perforated metal sheet over the total surface of the metal fiber fleece. Preferably, but not necessarily, the perforated metal sheet may extend beyond the metal fiber fleece.

Preferably, the reinforcing layer such as a perforated metal sheet has an essentially flat surface in such a way that a good contact is obtained between the metal fiber fleece and the metal areas of the reinforcing layer over essentially the whole surface of the metal area.

The metal fiber fleece may be sintered first to obtain a sintered metal fiber fleece. This sintered metal fiber fleece is then sintered to the perforated metal sheet as subject of the invention. Alternatively, the metal fiber fleece and perforated metal sheet are sintered to each other during one sintering step.

In a preferred embodiment the metal fiber fleece and the reinforcing layer are made from the same metal or metal alloy.

During filtration, particles are retained on the surface of the filter medium. Some particles may enter the pores of the filter medium and are caught in the porous structure of the filter medium. To avoid that the filter medium is clogged and as a consequence, the filtration flux decreases to very low levels or even to zero, the retained particles have to be removed from the filter medium or out of the porous structure of the filter medium. This may be done by reverse flow cleaning, such as high pressure liquid cleaning, vacuum cleaning or pressurised air blowing.

For this purpose, the apparatus according to the invention is provided with at least one first sprayer means. Air or a liquid is flushed from this first sprayer means towards the flow-out side of the filter medium.

The flow-out side of the filter medium is defined as the side of the filter medium where the filtrate (filtered liquid) leaves the filter medium.

The flow-in side of the filter medium on the contrary is defined as the side of the filter medium where the liquid to be filtered enters into the filter medium.

The first sprayer means are flushing air or a liquid such as water or the filtrate towards the flow-out side of the filter medium. The particles retained by the filter medium are blown or pushed backwards by the air or the liquid.

Possibly, at the flow-in side of the filter medium a collecting means is arranged for collecting the particles that are released from the filter medium.

In order to assure that the whole surface of the filter medium will be cleaned, it can be preferred that the tubular filter element is capable of turning around. Alternatively or additionally, the first sprayer means may turn around. Preferably, they reach the whole surface of the filter medium.

The reverse flow cleaning may bend or deform the metal fiber fleece in a direction towards the flow-in side.

If the reinforcing layer is located at the flow-in side of the filter medium, the metal fiber fleece is supported during reverse flow cleaning. No damage of the metal fiber fleece can be observed. The reinforcing layer may absorb the energy provided by the reverse flow cleaning.

In case the reinforcing layer is located at the flow-out side of the filter medium, the metal fiber fleece is not supported at the flow-in side during reverse flow cleaning.

However, due to the sinter-bond between the reinforcing layer located at the flow-out side of the filter medium and the metal fiber fleece, the metal fiber fleece is not disconnected from the perforated metal sheet. The sinter-bond is sufficiently strong so that the energy provided by reverse flow cleaning such as high pressure liquid cleaning can be absorbed without bending or deforming the metal fiber fleece.

To assure that the sinter-bond between the reinforcing layer and the metal fiber fleece is strong enough, the dimensions of the open areas are preferably chosen in such a way that the distance between each point of an open area and the edge of the open area is less than 100 mm. More preferably, this distance is less than 70 mm, or even less than 40 mm, such as 30 mm. This distance will hereafter be referred to as "critical distance".

Furthermore it is preferred that the smallest distance between the edge of an open area, closest to the edge of the metal fiber fleece is more than 5 mm or even more than 10 mm. In other words, the metal fiber fleece and the metal area of the perforated metal sheet preferably have a common zone with a width of at least 5 mm at the edge of the metal fiber fleece. These zones will hereafter be referred to as "common zones". This common zone is to be foreseen in order to avoid non filtered liquid by-passing the filter at the edge of the metal fiber fleece. Alternatively, the edge of the metal fiber fleece may be subjected to a welding operation or a compressing operation, to close the pores of the metal fiber fleece at its edge, in order to avoid by-pass of liquid via the edge of the metal fiber fleece.

Filter media having the reinforcing layer at the flow-out side furthermore have the advantage that particles retained at the flow-in side may be removed uniformly by reverse flow cleaning since they are not hindered by a reinforcing layer.

As the filter medium is operated for a long period of time, bacteria or other organisms may be propagated in the filter medium. In order to avoid that the filter medium is clogged up due to bacteria or other organisms, the filter medium may be washed by chemicals such as acids at regular times. For this purpose, it can be desired that the filtration apparatus is provided with at least one second sprayer means arranged at the flow-out side of the filter medium for spraying chemicals toward the filter medium.

Possibly, the filtration apparatus may be equipped with additional cleaning means such as means using ultrasonic waves or a vacuum cleaner.

In a first group of filtration apparatuses the liquid is filtered from the inside of the tubular filter element to the outside of the tubular filter element.

In a second group of filtration apparatuses the liquid is filtered from the outside of the tubular filter element to the inside of the tubular filter element.

The filtration direction is determined by the difference between the liquid level inside and outside the tubular filter element.

An important advantage of the filtration apparatus according to the present invention is the high filtration flux that can be reached, even at a very low differential pressure created by the difference between the liquid level inside and outside the filtration drum. This differential pressure can be considered as the driving force of the filtration process. Due to the high filtration flux, the size of a filtration apparatus is considerably smaller than the size of conventionally used filtration apparatuses.

According to a second aspect of the present invention the use of a filtration apparatus according to the present invention for the filtration of liquids is provided.

A filtration apparatus according to the present invention can be used for the filtration of any kind of liquids, such as cooling emulsions, waste water or liquids containing valuable particles, such as precious metals. A filtration apparatus according to the present invention can also be used to perform a pre-filtration.

It has been shown that the filtration apparatus is very suitable for the filtration of cooling emulsions in metal working processes and for the recovery of valuable particles.

According to a further aspect of the present invention a filtration tank comprising a filtration apparatus as described above is provided.

The filtration apparatus may comprise only one tubular filter element or may comprise a number of tubular filter elements, for example to increase the filter capacity of the filtration apparatus.

The longitudinal axis of the tubular filter element can be located either horizontally or vertically.

It can be preferred that the lower part of the filtration tank has a conical shape. In such a filtration tank heavier particles may sediment before taking part in the filtration process.

The filtration tank may further comprise a means for evacuating particles that are sedimented or precipitated. Possible means comprise an outlet, a conveyor belt or an Archimedes' screw.

### Brief description of the drawings.

The invention will now be described into more detail with reference to the accompanying drawings wherein
- FIGURE 1 is a longitudinal view of a filtration apparatus according to the present invention;
- FIGURE 2 is a cross-sectional view of the filtration apparatus shown in FIGURE 1;
- FIGURE 3 shows a filter medium used in the apparatus as shown in figure 1;
- FIGURE 4 shows a filtration apparatus whereby the liquid is filtered from the outside to the inside of the tubular filter element;
- FIGURE 5 shows a filtration apparatus having a vertically oriented longitudinal axis;
- FIGURE 6 and 7 show two different embodiments of filtration tanks comprising a filtration apparatus according to the present invention;
- FIGURE 8 shows a further embodiment of a filtration apparatus according to the present invention;
- FIGURE 9 shows a filtration tank comprising a tubular filter element as shown in figure 5.

### Description of the preferred embodiments of the invention.

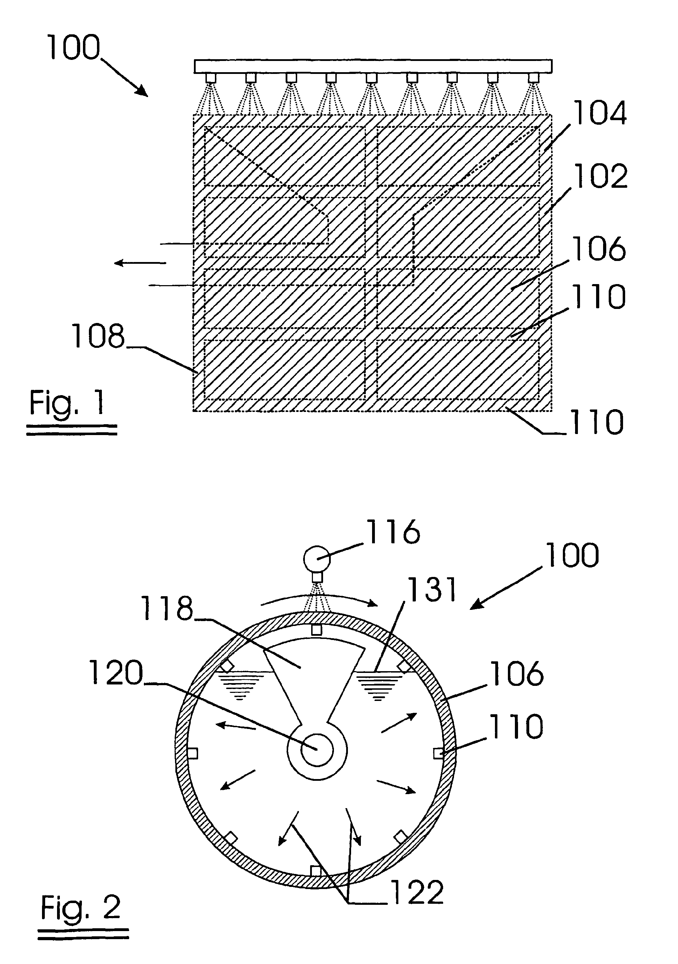

Figure 1 and figure 2 show a filtration apparatus 100 according to the present invention : figure 1 shows a longitudinal view of a filtration apparatus; whereas figure 2 shows a cross-sectional view of this apparatus.

The filtration apparatus 100 comprises a tubular filter element 102. The tubular filter element comprises a filter medium 106. To increase the strength of the filter element, it may comprise a drum body 104.

In many cases the presence of a drum body is not necessary as the reinforcing layer of the filter medium is giving a sufficient strength.

The drum body 104 comprises a number of annular stays 108 extending parallel to one another. These annular stays 108 are for example arranged at the middle and end positions of the drum.

A number of reinforcing ribs 110 are arranged horizontally to couple the annular stays together.

A filter medium 106 is placed around the drum body 104. The filter medium is fixed to this drum body in a leakproof way.

The filter medium 106 comprises a non-woven metal fiber fleece sintered to a metal sheet provided with open areas. Possibly, a mesh is fixed to the non-reinforced side of the filter medium.

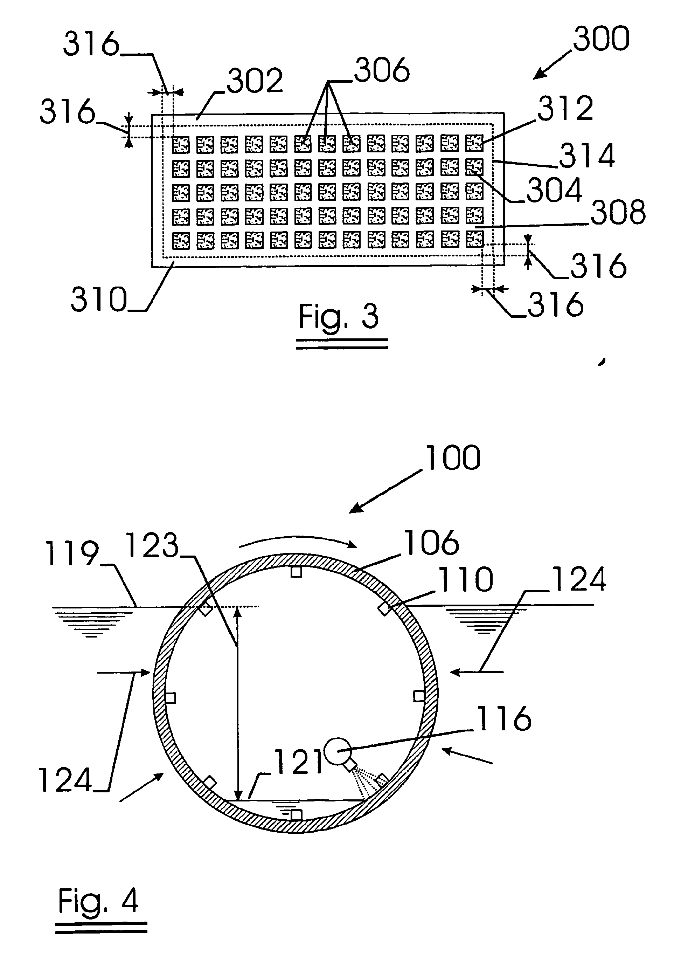

The filter medium is shown in more detail in figure 3.

The filter medium 106 can be mounted on the drum body 104 with the metal sheet facing the drum body and thus with the metal fiber fleece at the outer circumference. Alternatively, the filter medium 106 can be mounted on the drum body with the metal fiber fleece facing the drum body and thus with the metal sheet at the outer circumference.

The filter medium 106 may comprise one panel mounted on the filter drum. Alternatively, a number of panels, each comprising a filter medium, is mounted on the filter drum.

It has to be clear that the filter medium 106 can be mounted on the drum body either at the outer circumference of the drum body or at the inner circumference of the drum body.

The liquid is filtered in the direction shown by the arrows 122, i.e. from the inside of the tubular filter element to the outside of the tubular filter element.

This filtration direction is determined by the difference between the level of the liquid inside 131 and outside the tubular filter element. Since the difference in level inside and outside the tubular filter element is the driving force of the filtration process, preferably this difference is high.

The filtration apparatus is further provided with a number of nozzles 116. At the flow-in side of the filter medium a collecting means 118 is arranged for collecting the particles that are released from the filter medium. The particles are carried away through a tube120.

An embodiment of a filter medium 300 used in the apparatus shown in figure 1 and 2 is illustrated in figure 3.

The filter medium 300 comprises a perforated metal sheet 302, which functions as reinforcing layer for a metal fiber fleece 304 (drawn in dashed line where it is covered by the perforated metal sheet). The perforated metal sheet 302 has several open areas 306, and a metal area 308. The perforated metal sheet and the metal fiber fleece are sintered to each other over the total surface of the metal area, which covers the metal fiber fleece.

Preferably, the perforated metal sheet 302 has a part 310 of its metal area, which extends beyond the metal fiber fleece 304.

Further, the edge 312 of an open area closest to the edge 314 of the metal fiber fleece defines a common zone with a width 316 of at least 10 mm.

Preferably, the edge of the metal fiber fleece is sealed by closing the pores of the metal fiber fleece at its edge by welding, e.g. resistance welding. Alternatively, the edge of the metal fiber fleece is sealed by compression of the edge, substantially closing the pores of the metal fiber fleece in the compressed zone.

A preferred filter medium comprises a non-woven metal fiber fleece and a metal sheet made of stainless steel, for example of alloy AISI 316L. The non-woven metal fiber fleece comprises for example 3 layers.

The first layer of the metal fiber fleece, being present at the flow-in side of the metal fiber fleece comprises a layer of fibers having a diameter of 2 µm and having a specific layerweight of 100 g/m². The second layer, being present beyond this first layer, comprises fibers having a diameter of 6 µm. The second layer has a specific layerweight of 150 g/m². A third layer of metal fibers, being present beyond the second layer at the flow-out side of the metal fiber fleece comprises a layer of fibers having a diameter of 12 µm and a layerweight of 600 g/m². These three layers are sintered to each other. In a subsequent step this layered structure is sintered to a perforated metal sheet of AISI 316L stainless steel of 1 mm thickness. The perforated metal sheet has square perforations with a width and a height of 40 mm and has metal areas between the open areas having a width of 5 mm.

The obtained filter medium has an absolute filter rating of 6 µm.

The filter medium has a porosity of 85 %.

The open areas of the reinforcing layer may have any shape; they are for example circular, square, rectangular, trapezoid or parallelogram-like.

Figure 4 shows a filtration apparatus whereby the liquid is filtered from the outside to the inside of the tubular filter element. The filtration direction is determined by the differential level of the liquid inside and outside the tubular filter element. The level of the liquid outside the tubular filter element is indicated by 119, the level of the liquid inside the tubular filter element is indicated by 121, whereas the differential level is indicated by 123. The filtration direction is indicated by the arrows 124.

The filtrate is carried away at one open end of the drum.

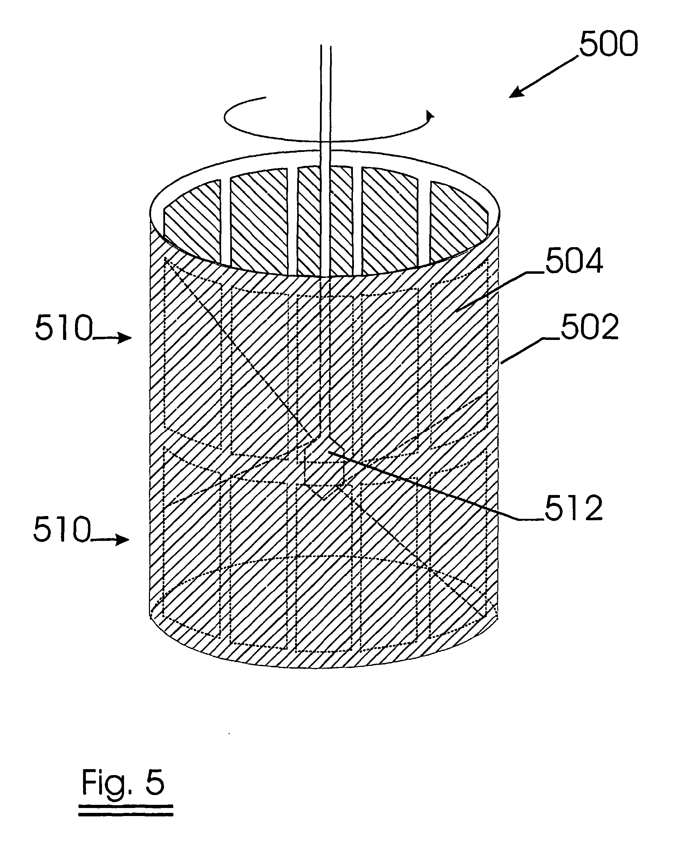

Figure 5 shows a further embodiment of a filtration apparatus 500 according to the present invention. The filtration apparatus 500 comprises a tubular filter element 502. The longitudinal axis of this tubular filter element is located vertically.

The tubular filter element comprises a filter medium 504.

The liquid is filtered in the direction shown by the arrows 510, i.e. from the outside of the tubular filter element to the inside of the tubular filter element.

The filtration apparatus is further provided with a first sprayer means comprising a nozzle 512. As the nozzle is capable of turning around the whole surface of the filter medium can be cleaned.

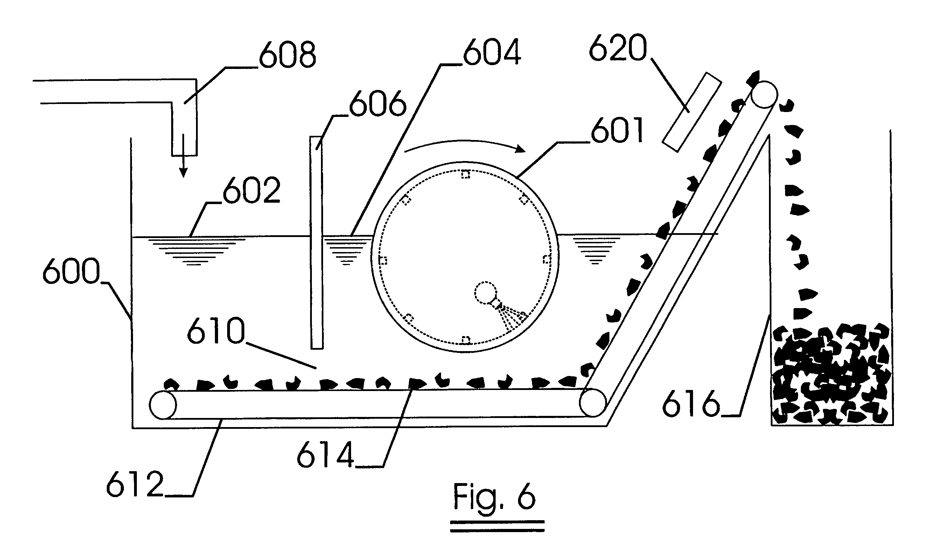

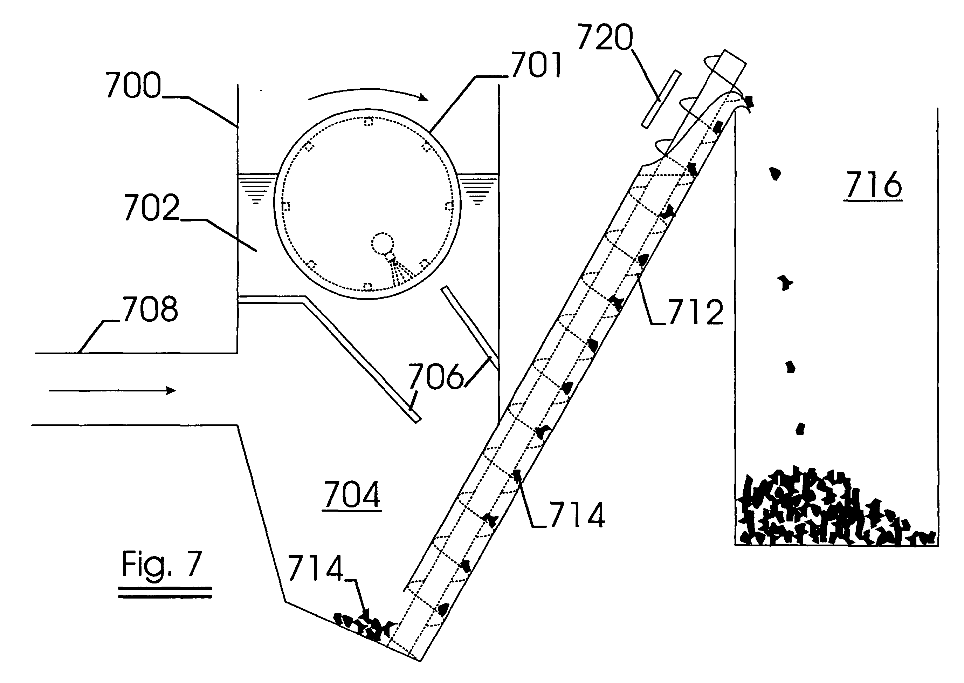

Figure 6 and figure 7 show two different embodiments of filtration tanks comprising a filtration apparatus according to the present invention.

In figure 6 a filtration tank 600 comprises a filtration apparatus 601 of the type as shown in figure 4.

The filtration tank 600 is divided in two divisions 602 and 604 by a baffle 606. The liquid to be filtered is introduced to the tank by means of tube 608. The liquid that enters the first division 602 is forced to go to the second division 604 through the small opening 610.

The major part of the particles of the liquid to be filtered, especially the heavier particles, will sediment and will fall on a conveyor belt 612. This conveyor belt is transporting the sedimented particles 614 to a container 616.

Since part of the particles present in the liquid to be filtered is collected and is conducted to a container 616 without taking part in the filtration process, the filter process by the filter element is facilitated since the particle concentration is lowered.

Possibly, a heating means 620 is installed to dry the waste 614 before this waste is collected in the container 616.

Figure 7 shows an alternative embodiment of a filtration tank 700 comprising a filtration apparatus 701.

The filtration tank 700 is divided in an upper part 702 and a lower part 704 by means of the walls 706. The liquid to be filtered is introduced to the tank by means of tube 708. The liquid enters at the lower part 704. Part of the particles 714 present in the liquid to be filtered will sediment and will be transported by means of an Archimedes' screw 712 to a container 716.

Also in this embodiment a heating means 720 can be installed to dry the waste 714 before being collected in the container 716.

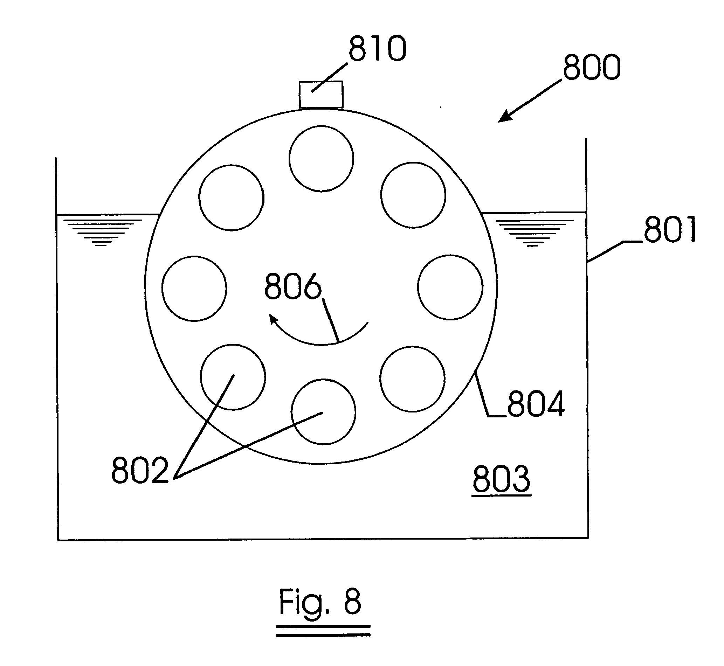

Figure 8 shows a filtration apparatus 800 in a filtration tank 801. The filtration apparatus 800 comprises eight tubular filter elements 802. Each of the drums comprises a drum body and a filter medium. The tubular filter elements are mounted on a plate 804. The filtration apparatus is capable of turning around as indicated by arrow 806.

As the tubular filter elements are capable of turning around, the upper drum is pulse jet cleaned (pressurised air) by means 810, installed at a fixed position.

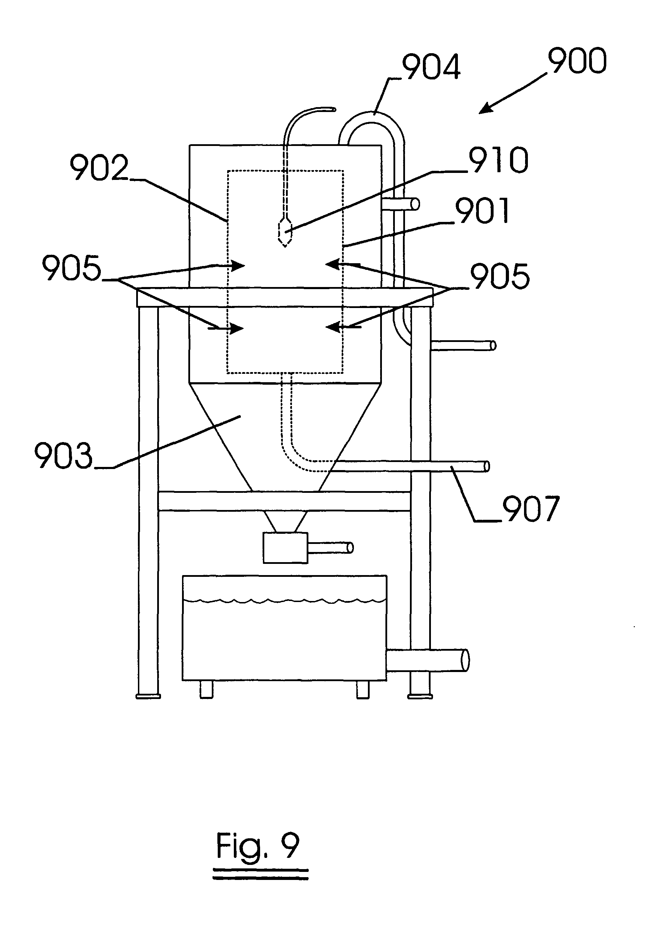

Figure 9 shows a filtration tank 900 comprising a filtration apparatus 901. The filtration apparatus comprises a tubular filter element 902 as shown in figure 5.

The lower part of the filtration tank 900 has a conical shape 903.

Part of the particles present in the liquid to be filtered will sediment and will not take part in the filtration process.

The liquid to be filtered is introduced in by means of tube 904. The liquid is filtered towards the inside of the tubular filter element as indicated by arrows 905. The filtrate is carried away through tube 907.

The filter medium is cleaned by means of the nozzle 910. This nozzle is capable of turning around inside the tubular filter element and may reach the whole surface of the filter medium.

## Claims

1. A filtration apparatus comprising at least one tubular filter element, said tubular filter element comprising a filter medium; said filter medium comprising a non-woven metal fiber fleece and a reinforcing layer, said non-woven metal fiber fleece being sintered to said reinforcing layer.

2. A filtration apparatus according to claim 1, whereby said non-woven metal fiber fleece is located at the flow-in side of the filter medium and whereby said reinforcing layer is located at the flow-out side of the filter medium.

3. A filtration apparatus according to claim 1, whereby said non-woven metal fiber fleece is located at the flow-out side of the filter medium and whereby said reinforcing layer is located at the flow-in side of the filter medium.

4. A filtration apparatus according to claim 1, whereby said filter medium comprises a non-woven metal fiber fleece at both sides of said reinforcing layer.

5. A filtration apparatus according to any one of the preceding claims, whereby said non-woven metal fiber fleece comprises metal fibers having an equivalent diameter ranging between 0.5 and 100 µm.

6. A filtration apparatus according to any one of the preceding claims, whereby said non-woven metal fiber fleece is sintered.

7. A filtration apparatus according to any one of the preceding claims, whereby said non-woven metal fiber fleece comprises a stack of different metal fiber fleeces, each metal fiber fleece comprising fibers with a specific equivalent diameter, fiber density and layerweight.

8. A filtration apparatus according to any one of the preceding claims, whereby said reinforcing layer comprises a metal sheet provided with open areas.

9. A filtration apparatus according to any one of the preceding claims whereby the total open area of said metal sheet is more than 50 % of the total surface of said metal fiber fleece, said total open area being the sum of the surfaces of all of said open areas.

10. An apparatus according to any one of the preceding claims, said metal fiber fleece and metal sheet being provided using the same metal or metal alloy.

11. An apparatus according to any one of the preceding claims, whereby at least one first sprayer means is arranged at the flow-out side of the filter medium for reverse flow cleaning.

12. An apparatus according to any one of the preceding claims, whereby said tubular filter element is capable of turning around.

13. An apparatus according to claim 11, whereby said first sprayer means is capable of turning around.

14. An apparatus according to any one of the preceding claims, .whereby at least one collecting means is arranged at the flow-in side of the filter medium.

15. An apparatus according to any one of the preceding claims, whereby at least one second sprayer means is arranged at the flow-out side of the filter medium for spraying chemicals toward said filter medium to wash said filter medium.

16. An apparatus according to any one of the preceding claims, whereby the apparatus is further equipped with an additional cleaning means such as means using ultrasonic waves or a vacuum cleaner.

17. An apparatus according to any one of the preceding claims, whereby the liquid is filtered from the inside of the tubular filter element to the outside of the tubular filter element.

18. An apparatus according to any one of the preceding claims, whereby the liquid is filtered from the outside of the tubular filter element to the inside of the tubular filter element.

19. Use of a filtration apparatus according to any one of claims 1 to 18 for the filtration of liquids.

20. A filtration tank comprising a filtration apparatus according to any one of claims 1 to 18.

21. A filtration tank according to claim 20, whereby the longitudinal axis of said tubular filter element is located horizontally.

22. A filtration tank according to claim 20, whereby the longitudinal axis of said tubular filter element is located vertically.

23. A filtration tank according to any one of claims 20 to 22, whereby the lower part of said filtration tank has a conical shape.

24. A filtration tank according to any one of claims 20 to 23, further comprising a means to evacuate particles that are sedimented or precipitated.

25. A filtration tank according to claim 24, whereby said means to evacuate particles comprise an outlet, a conveyor belt or an Archimedes' screw.

## Patentansprüche

1. Filtrier-Vorrichtung, welche mindestens ein rohrförmiges Filterelement umfasst, wobei das besagte Filterelement ein Filtermaterial aufweist, welches besagte Filtermaterial einen nicht gewebten Metallfaser-Vliesstoff und eine verstärkende Schicht aufweist, wobei der nicht gewebte Metallfaser-Vliesstoff an die besagte verstärkende Schicht gesintert ist.

2. Filtrier-Vorrichtung nach Anspruch 1, wobei der besagte nicht gewebte Metallfaser-Vliesstoff sich auf der Einlassseite des Filtermaterials befindet und die besagte verstärkende Schicht sich auf der Auslassseite des Filtermaterials befindet.

3. Filtrier-Vorrichtung nach Anspruch 1, wobei der besagte nicht gewebte Metallfaser-Vliesstoff sich auf der Auslassseite des Filtermaterials befindet und die besagte verstärkende Schicht sich auf der Einlassseite des Filtermaterials befindet.

4. Filtrier-Vorrichtung nach Anspruch 1, wobei das besagte Filtermaterial einen nicht gewebten Metallfaser-Vliesstoff auf beiden Seiten der verstärkenden Schicht aufweist.

5. Filtrier-Vorrichtung nach einem der vorangehenden Ansprüche, wobei der nicht gewebte Metallfaser-Vliesstoff Metallfasern mit einem gleichwertigen Durchmesser von 0.5 bis 100 µm aufweist.

6. Filtrier-Vorrichtung nach einem der vorangehenden Ansprüche, wobei der besagte nicht gewebte Metallfaser-Vliesstoff gesintert ist.

7. Filtrier-Vorrichtung nach einem der vorangehenden Ansprüche, wobei der besagte nicht gewebte Metallfaser-Vliesstoff einen Stapel von verschiedenen Metallfaser-Vliesen umfasst, wobei jedes Metallfaser-Vlies Fasern mit spezifischen, gleichwertigen Durchmessern, Faserdichten und Schichtgewichten aufweist.

8. Filtrier-Vorrichtung nach einem der vorangehenden Ansprüche, wobei die besagte verstärkende Schicht eine mit offenen Bereichen versehene Blechtafel umfasst.

9. Filtrier-Vorrichtung nach einem der vorangehenden Ansprüche, wobei der gesamte offene Bereich der besagten Blechtafel mehr als 50% der gesamten Fläche des besagten Metallfaser-Vliesstoffes ist, wobei der besagte gesamte offene Bereich die Summe der Flächen von allen besagten offenen Bereichen ist.

10. Vorrichtung nach einem der vorangehenden Ansprüche, wobei für den besagten Metallfaser-Vliesstoff und die Blechtafel, die vorgesehen sind, dasselbe Metall oder dieselbe Metalllegierung verwendet werden.

11. Vorrichtung nach einem der vorangehenden Ansprüche, wobei mindestens ein erstes Spritzmittel an der Auslassseite des Filtermaterials zur Rückflussreinigung angeordnet ist.

12. Vorrichtung nach einem der vorangehenden Ansprüche, wobei das besagte rohrförmige Filterelement in der Lage ist, sich zu drehen.

13. Vorrichtung nach einem der vorangehenden Ansprüche, wobei das besagte erste Spritzmittel in der Lage ist, sich zu drehen.

14. Vorrichtung nach einem der vorangehenden Ansprüche, wobei mindestens ein Sammelmittel an der Einlassseite des Filtermaterials angeordnet ist.

15. Vorrichtung nach einem der vorangehenden Ansprüche, wobei mindestens ein zweites Spritzmittel an der Auslassseite des Filtermaterials zum Bespritzen des besagten Filtermaterials mit Chemikalien angeordnet ist, um das besagte Filtermaterial zu reinigen.

16. Vorrichtung nach einem der vorangehenden Ansprüche, wobei die Vorrichtung ferner mit zusätzlichen Reinigungsmitteln ausgestattet ist, wie zum Beispiel Mittel mit Einsatz von Ultraschall oder einem Staubsauger.

17. Vorrichtung nach einem der vorangehenden Ansprüche, wobei die Flüssigkeit von dem Inneren des rohrförmigen Filterelements zum Äußeren des rohrförmigen Filterelements hin gefiltert wird.

18. Vorrichtung nach einem der vorangehenden Ansprüche, wobei die Flüssigkeit von dem Äußeren des rohrförmigen Filterelements in das Innere des rohrförmigen Filterelements hin gefiltert wird.

19. Anwendung einer Filtrier-Vorrichtung nach einem der Ansprüche 1 bis 18 zur Filtrierung von Flüssigkeiten.

20. Filtriertank, der eine Filtrier-Vorrichtung nach einem der Ansprüche 1 bis 18 umfasst.

21. Filtriertank nach Anspruch 20, wobei die Längsachse des besagten rohrförmigen Filterelements waagerecht ausgerichtet ist.

22. Filtriertank nach Anspruch 20, wobei die Längsachse des besagten rohrförmigen Filterelements senkrecht ausgerichtet ist.

23. Filtriertank nach einem der Ansprüche 20 bis 22, wobei der untere Teil des besagten Filtriertanks kegelförmig ausgebildet ist.

24. Filtriertank nach einem der Ansprüche 20 bis 23, welcher ferner ein Mittel aufweist, um Teilchen, die abgelagert oder gefällt sind, abzuleiten.

25. Filtriertank nach Anspruch 24, wobei die besagten Mittel zur Ableitung von Teilchen einen Auslass, ein Förderband oder eine archimedische Schraube umfassen.

## Revendications

1. Dispositif de filtration comprenant au moins un élément filtrant tubulaire, ledit élément filtrant tubulaire comportant un milieu filtrant ; ledit milieu filtrant consistant en un molleton de fibres métalliques non tissées et une couche de renforcement, ledit molleton de fibres métalliques non tissées étant fritté sur ladite couche de renforcement.

2. Dispositif de filtration selon la revendication 1, au moyen duquel ledit molleton de fibres métalliques non tissées est situé à l'entrée du flux du milieu filtrant et, au moyen duquel, ladite couche de renforcement est située à la sortie du flux du milieu filtrant.

3. Dispositif de filtration selon la revendication 1, au moyen duquel ledit molleton de fibres métalliques non tissées est situé à la sortie de flux du milieu filtrant, et, au moyen duquel, ladite couche de renforcement est située à l'entrée de flux du milieu filtrant.

4. Dispositif de filtration selon la revendication 1, au moyen duquel ledit milieu filtrant comporte un molleton de fibres métalliques non tissées sur les deux faces de ladite couche de renforcement.

5. Dispositif de filtration selon l'une quelconque des revendications précédentes, au moyen duquel ledit molleton de fibres métalliques non tissées comporte des fibres métalliques possédant un diamètre équivalent allant de 0,5 à 100 µm.

6. Dispositif de filtration selon l'une quelconque des revendications précédentes, au moyen duquel ledit molleton de fibres métalliques non tissées est fritté.

7. Dispositif de filtration selon l'une quelconque des revendications précédentes, au moyen duquel ledit molleton en fibres métalliques non tissées comporte un empilement de divers molletons de fibres métalliques, chaque molleton de fibres métalliques comprenant des fibres avec un diamètre équivalent, une densité de fibres et un poids de couche précis.

8. Dispositif de filtration selon l'une quelconque des revendications précédentes, au moyen duquel ladite couche de renforcement comporte une feuille métallique pourvue de trous.

9. Dispositif de filtration selon l'une quelconque des revendications précédentes, au moyen duquel la superficie ouverte totale de ladite feuille métallique représente plus de 50 % de la surface totale dudit molleton de fibres métalliques, ladite surface totale ouverte étant la somme des surfaces ouvertes de tous lesdits trous.

10. Dispositif selon l'une quelconque des revendications précédentes, ledit molleton de fibres métalliques, et la feuille métallique le munissant, utilisant le même métal ou le même alliage métallique.

11. Dispositif selon l'une quelconque des revendications précédentes, au moyen duquel au moins l'un des systèmes de pulvérisation est agencé à la sortie de flux du milieu filtrant pour un nettoyage à contre-courant.

12. Dispositif selon l'une quelconque des revendications précédentes au moyen duquel ledit élément filtrant tubulaire est capable de fonctionner dans l'autre sens.

13. Dispositif selon la revendication 11, au moyen duquel ledit premier système de pulvérisation est capable de fonctionner dans l'autre sens.

14. Dispositif selon l'une quelconque des revendications précédentes, au moyen duquel au moins l'un des systèmes de collecte est agencé à l'entrée du milieu de filtration.

15. Dispositif selon l'une quelconque des revendications précédentes, au moyen duquel un second système de pulvérisation est agencé à la sortie du milieu filtrant pour la pulvérisation de produits chimiques vers ledit milieu filtrant pour laver ledit milieu filtrant.

16. Dispositif selon l'une quelconque des revendications précédentes, au moyen duquel le dispositif est en plus équipé d'un système de nettoyage supplémentaire tel qu'un système utilisant les ultrasons, ou un aspirateur.

17. Dispositif selon l'une quelconque des revendications précédentes, au moyen duquel le liquide est filtré à partir de l'intérieur de l'élément filtrant tubulaire vers l'extérieur de l'élément filtrant tubulaire.

18. Dispositif selon l'une quelconque des revendications précédentes au moyen duquel le liquide est filtré à partir de l'extérieur de l'élément filtrant tubulaire vers l'intérieur de l'élément de filtration tubulaire.

19. Utilisation d'un dispositif de filtration selon l'une quelconque des revendications 1 à 18 pour la filtration de liquides.

20. Cuve de filtration comprenant un dispositif de filtration selon l'une quelconque des revendications 1 à 18.

21. Cuve de filtration selon la revendication 20 au moyen de laquelle l'axe longitudinal dudit élément filtrant tubulaire est positionné horizontalement.

22. Cuve de filtration selon la revendication 20 au moyen de laquelle l'axe longitudinal dudit élément filtrant tubulaire est positionné verticalement.

23. Cuve de filtration selon l'une quelconque des revendications 20 à 22, au moyen de laquelle la partie inférieure de ladite cuve de filtration possède une forme conique.

24. Cuve de filtration selon l'une quelconque des revendications 20 à 23, comprenant en outre un système pour évacuer les particules qui ont sédimenté ou précipité.

25. Cuve de filtration selon la revendication 24, au moyen de laquelle les systèmes pour évacuer les particules sont constitués par une sortie, un convoyeur à bande ou une vis d'Archimède.
